# EUROPEAN PATENT SPECIFICATION

(11) **EP 2 892 712 B1**
(45) Date of publication and mention of the grant of the patent: **11.04.2018**
(21) Application number: 13767139.2
(22) Date of filing: 06.09.2013
(51) Int. Cl.: B29D 11/00

(54) **METHOD FOR MANUFACTURING AN OPTICAL INSERT FOR AN INJECTION MOLD FOR MANUFACTURING AN OPHTHALMIC DEVICE**
VERFAHREN ZUR HERSTELLUNG EINES OPTISCHEN EINSATZES FÜR EINE SPRITZGIESSFORM ZUR HERSTELLUNG EINES OPHTHALMISCHEN ELEMENTS
PROCÉDÉ POUR FABRIQUER UN INSERT OPTIQUE DESTINÉ À UN MOULE D'INJECTION POUR LA RÉALISATION D'UN DISPOSITIF OPHTALMIQUE

(30) Priority: 07.09.2012 NL 2009435
(43) Date of publication of application: 15.07.2015
(73) Proprietor: Innovalens B.V., 5657 EN Eindhoven (NL)
(72) Inventor: VAN DIJK, Emerentius Maria Josephus Antonius, NL-5657 EN Eindhoven (NL)
(74) Representative: V.O.
(86) International application number: PCT/NL2013/050644
(87) International publication number: WO 2014/038940

(56) References cited:
- US-A- 5 861 114
- US-A1- 2006 145 370
- US-A1- 2006 145 372

## Description

### Field of the invention

The invention relates to a method for manufacturing an optical insert for an injection mold for manufacturing an ophthalmic device, such as a contact lens, an intraocular lens or a cast mold half for manufacturing a contact lens or an intraocular lens.

The invention also relates to a method for manufacturing an injection mold for manufacturing an ophthalmic device.

Further, the invention relates to a method for manufacturing an ophthalmic device, such as for instance a contact lens, an intraocular lens or a cast mold half, and to a method for manufacturing a cast mold for manufacturing a contact lens or an intraocular lens.

Finally, the invention relates to a method for manufacturing a contact lens or an intraocular lens with the aid of the cast mold manufactured with the new method.

### Background

A cast mold for the purpose of manufacturing contact lenses or intraocular lenses is described in, for instance, NL1033905C, EP-A-0 367 513 or in US 2009/0166507 A1. The cast mold known from NL1033905C is provided with a first cast mold half comprising an optically accurately defined surface and first positioning means. Further, the known cast mold is provided with a second cast mold half comprising a central part with optically accurately defined surface, a bearing ring which surrounds the central part and which is provided with second positioning means configured for engagement of the first positioning means in a closed position of the cast mold in which the first and the second cast mold halves are placed on top of each other. For the purpose of manufacturing a contact lens or intraocular lens, a monomeric material is introduced into one of the two cast mold halves and then the second cast mold half is placed on the first cast mold half. The monomeric material will then polymerize.

In NL1033905C it is described that the positioning means may be configured for fastening the second cast mold half onto the first cast mold half and, in use, keeping them on top of one another under a bias.

From NL1033905C and EP-A-0 367 513 it is also known to use one of the mold halves as part of a package with which the lens can subsequently be put on the market.

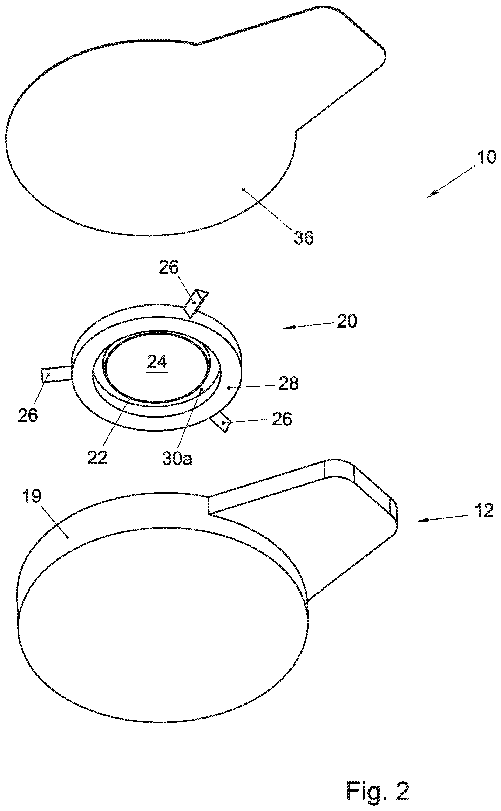

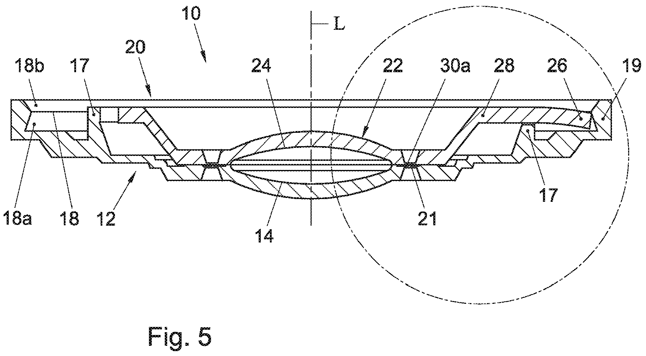

The publications mentioned disclose nothing relevant about the manner of manufacturing plastic cast molds. About that, more can be learned from US 5,540,410. Especially Fig. 5 from this publication with the associated description in column 10, line 38 to column 14, line 3 is particularly clarifying and is therefore understood to be incorporated herein by reference. Also US 2006/145370 discloses a method and an injection mold for injection molding a cast mold. The injection mold is provided with optical tool optical inserts which are detachably secured in a *body 40* which is secured in an injection mold half. With a *"molding dowel 44*" extending in an axial direction the *body 40* is secured in a *cavity ring 36* of the injection mold half. Further, Fig. 2 shows a *"clocking dowel 46"* which *"rotatably positions the optical insert 38 relative to the body 40".* The manner in which the optically accurately defined surface can be provided on an optical insert is described at length in US 5,861,114 in which, *inter alia*, the use of a CNC-controlled lathe for forming an aspheric, optically accurately defined insert surface is described.

### Summary of the invention

A problem that is not touched upon in the above publications but does have a bearing on the manufacture with the aid of the injection mold of ophthalmic products, such as contact lenses, intraocular lenses or cast mold halves for manufacturing a contact lens or an intraocular lens, is to provide a particularly accurate positioning, which includes positioning in a rotational sense, of an optically accurately defined surface of the ophthalmic device with respect to a reference surface of the ophthalmic device. The optically accurately defined surface of the ophthalmic device is generally formed by the cylindrical optical insert of the injection mold while the reference surface of the ophthalmic device is formed by another part of the injection mold, for instance the part of the injection mold half that surrounds the optical insert or the part of the other, opposite injection mold half that bounds the injection mold cavity. While US 2006/145370 describes a *clocking dowel 46* for rotational positioning of the optical insert relative to the *body 40*, it is not disclosed whether the optically accurately defined surface of the optical insert is oriented in any way in a rotational sense relative to the axial recess in the optical insert that is engaged by the *clocking dowel 46.*

Especially for manufacturing a cast mold half with positioning means with the aid of which the respective cast mold half is positioned - also in a rotational sense - with respect to a second cast mold half which is provided with positioning means, it may be of great importance that the optically accurately defined surface of the cast mold half is accurately positioned - also in a rotational sense - with respect to the positioning means. This is especially important when also the second cast mold half is provided with an optically accurately defined surface, whereby the two accurately optically defined surfaces together in combination form a contact lens or an intraocular lens with a desired optical effect.

Also when the injection mold is used for direct manufacture of a contact lens or intraocular lens - that is, without intervention of a manufacture of a cast mold - it is of importance that the two opposite optical surfaces thereof, which will both be formed by means of an associated optical insert, be accurately positioned relative to each other, both in lateral and in rotational sense.

To this end, the invention provides a method for manufacturing a cylindrical optical insert for an injection mold for manufacturing an ophthalmic device, such as a lens blank, a contact lens, an intraocular lens or a cast mold half for manufacturing a lens blank, a contact lens or an intraocular lens, the ophthalmic device being at least provided with:
- an optically accurately defined surface which is not circularly symmetric about a central axis but for instance toric, aspheric or bifocal or a combination thereof; and
- at least one reference surface with respect to which the optically accurately defined surface is to be accurately positioned both in lateral directions and rotational direction;
the injection mold comprising:
- a first injection mold half having at least one cylindrical optical insert opening;
- at least one cylindrical optical insert, the optical insert being provided with an optically accurately defined optical insert surface, the optical insert being detachably included in the cylindrical optical insert opening;
- a second injection mold half which together with the first injection mold half with the optical insert included therein determines in a closed position an injection mold cavity in which the ophthalmic device with the at least one reference surface is injection molded and whereby the optically accurately defined optical insert surface defines the optically accurately defined surface to be formed of the ophthalmic device;
- a recess or projection in the cylindrical optical insert opening which comprises at least one positioning surface which extends in a direction parallel to the axis of the optical insert opening;
- a stop on the cylindrical optical insert, associated with the at least one positioning surface, which abuts against the at least one positioning surface for rotational orientation of the optical insert in the cylindrical optical insert opening, the stop on the cylindrical optical insert being a stop surface or a stop pin which is included in a pin recess in the cylindrical optical insert;
the method comprising:
- manufacturing the optically accurately defined surface of the optical insert on a lathe with a CNC control, the lathe being provided with a clamping head rotatable about a main axis, whose rotational position is controllable, the lathe being provided with a tool which is controllably displaceable in a direction (X) substantially perpendicular to the main axis (A) and in a direction (Z) parallel to the main axis of the lathe, whereby the optically accurately defined surface is formed by controlled rotation of the clamping head and controlled displacement of the tool, starting from a clamped position of the optical insert in the clamping head;
- manufacturing the stop surface or the pin recess of the optical insert with a cutter or a drill while the optical insert is in the clamped position in the clamping head, whereby the CNC control defines the position of the stop surface or the pin recess with respect to the optically accurately defined surface through accurate rotational control of the clamping head for positioning the optical insert with respect to the cutter or drill.

Further, the invention provides a method for manufacturing an injection mold in accordance with claim 5 which method includes the method for making an optical insert according to claim 1.

The invention further provides a method for manufacturing an ophthalmic device, comprising:
- providing an injection mold with the method according to any one of claims 5-9;
- injecting plastic into the injection mold cavity;
- curing of the plastic in the injection mold cavity; and
- removing the ophthalmic device from the injection mold cavity.

With the aid of this method, a lens blank, a contact lens or an intraocular lens can be manufactured directly. It is also possible, however, that with the method concerned a cast mold is manufactured which comprises a first cast mold half and a second cast mold half. With the aid of such a cast mold, in turn, a lens blank, a contact lens or an intraocular lens can be manufactured by cast molding.

### Brief description of the drawings

Fig. 1 shows in perspective from a first viewpoint an exemplary embodiment of a cast mold in exploded view which is intended for manufacture of a contact lens;
Fig. 2 shows the exemplary embodiment of the cast mold of Fig. 1 in exploded view from a second viewpoint;
Fig. 3 shows a cross-sectional view in a plane in which the axis extends;
Fig. 4 shows a perspective view of a second exemplary embodiment of a cast mold which is intended for manufacture of an intraocular lens;
Fig. 5 shows a cross-sectional view in a plane in which the axis extends;
Fig. 6 shows a cross-sectional view of a contact lens;
Fig. 7 shows a cross-sectional view of a lens blank;
Figs. 8-10 show exploded views from different directions of an exemplary embodiment of an injection mold for the purpose of the manufacture of an ophthalmic device;
Fig. 11 shows a front view of the exemplary embodiment shown in Figs. 8-10;
Fig. 12 shows a cross section along line X-X of Fig. 11;
Fig. 13 shows a cross section along line XI-XI of Fig. 11; and
Fig. 14 shows a perspective view of an example of a lathe with the aid of which an optical insert can be manufactured.

### Detailed description

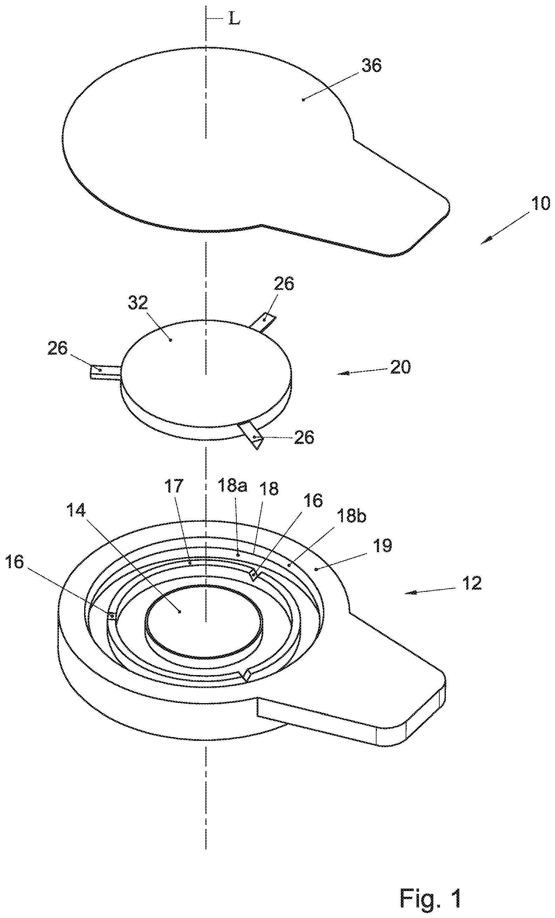

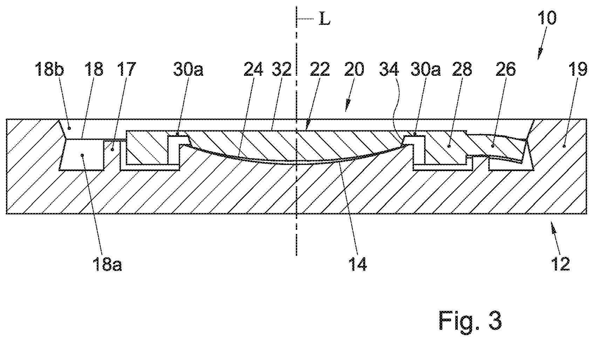

Figs. 1-3 show an example of the cast mold 10 for the purpose of manufacturing a contact lens. The cast mold 10 is provided with a first cast mold half 12. The first cast mold half 12 has an optically accurately defined surface 14 and first positioning means 16-18. In the exemplary embodiment, the first positioning means 16-18 are configured as recesses 16 in a substantially circular support rib 17 which surrounds the optically accurately defined surface 14, and a substantially circular clamping edge 18 which extends around the circular support rib 17 and which forms an integral part of an outer edge 19. On both sides of the clamping edge 18 extend, viewed from the clamping edge 18, radially outwardly widening annular surfaces 18a, 18b, which form an integral part of the outer edge 19 and which provide for centering of the second cast mold half 20 with respect to the first cast mold half 12. In an alternative implementation, however, the first positioning means 16-18 may also be configured as protrusions or projections.

The cast mold 10 is further provided with a second cast mold half 20. The second cast mold half 20 is provided with a central part 22 with optically accurately defined surface 24. Further, the second cast mold half 20 has a bearing ring 28 which surrounds the central part 22 and which is provided with second positioning means 26. The second positioning means 26 are configured for engagement of the first positioning means 16-18 in a closed position of the cast mold 10, in which the first and the second cast mold halves 12, 20 are placed on top of each other and whereby the first and the second positioning means 16-18, 26 in the mutually engaging condition generate a clamping force which presses the second cast mold half 20 under a bias onto the first cast mold half 12. In the exemplary embodiment shown, the second positioning means 26 are designed as legs extending in radial direction. In this exemplary embodiment, the clamping force is generated by bending of the legs 26 which rest by a radially inwardly located portion in the recesses 16 of the support rib 17 and are snapped by a radially outer end under the clamping edge 18, requiring the legs 26 to be bent. The positioning means 16-18 have the functions not only of centering the two cast mold halves 12, 20 relative to each other and clamping them onto each other, but also of defining the rotational position of the two cast mold halves 12, 20 relative to each other.

A central axis L of the second cast mold 20 extends perpendicularly to the plane in which the bearing ring 28 extends, and intersects a center of the bearing ring 28. The second cast mold half 20 is provided with a thin-walled, flexible connection 30 which extends between the bearing ring 28 and the central part 22 and which connects the central part 22 to the bearing ring 28.

In the example of the second cast mold half 20 shown in Figs. 1-3, the flexible connection 30 can be configured as an annular plastic film 30a which is connected by an outer edge thereof to the bearing ring 28 and which is connected by an inner edge thereof to the central part 22. Such a film connection provides good flexibility and hence freedom of movement of the central part 22 relative to the bearing ring 28, which is of importance in order for material stresses that occur when the second cast mold half 20 is clamped onto the first cast mold half 12 not to be transmitted to the optically accurately defined surface 24 of the second cast mold half 20. Also, an embodiment with an annular plastic film 30a yet offers a considerable through-flow surface area, which is important for the supply of plastic from the bearing ring cavity to the central part cavity in the injection mold 50 during the manufacturing process. Moreover, force transmission over the entire circumference of the central part 22 to the bearing ring 28 is uniform, which results in minimal deformation of the central part 22 under the influence of forces applied thereto during the lens manufacturing process.

The seal can be formed, for instance, by a foil 36 which is attached onto an outer edge 19 of the first cast mold half 12 through sealing. In an alternative implementation, it is possible for the seal 36 to be formed by a lid provided with a bayonet or thread provision which cooperates with a bayonet or thread provision on the first cast mold half 12.

Prior to the provision of the seal 36, a liquid can be introduced into the cast mold half 12.

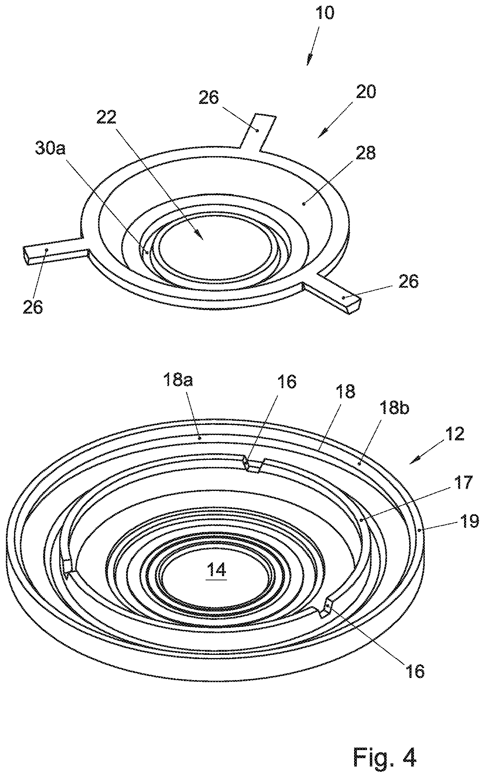

A second example of a cast mold 10 is shown in Figs. 4 and 5, where for the same parts the same reference numerals are used. The second exemplary embodiment involves a cast mold 10 for manufacturing an intraocular lens. Clearly, the intraocular lens that is manufactured with this second exemplary embodiment of the cast mold 10 will have two convex optical surfaces, whereas the first exemplary embodiment which is shown in Figs. 1-3 and Fig. 5 leads to a contact lens with a concave and an opposite convex optical surface.

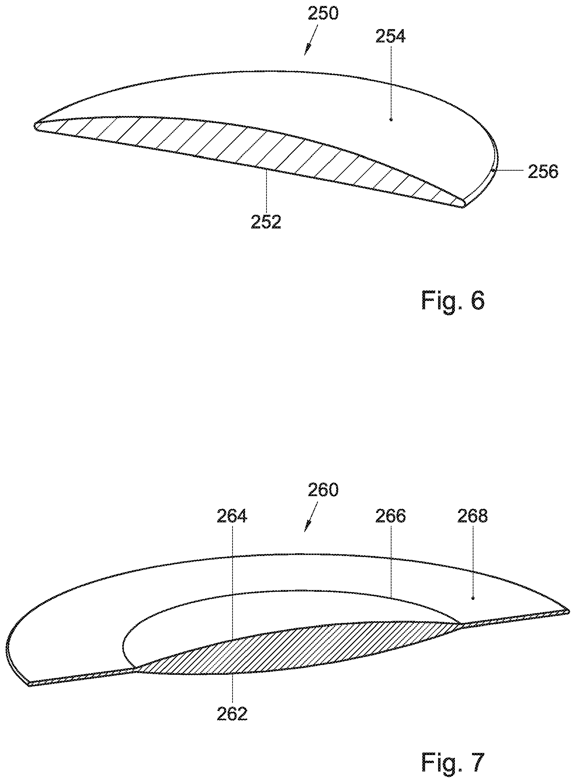

Fig. 6 shows a perspective view of a contact lens 250 in cross section. The contact lens 250 is provided with a concave side 252 and a convex side 254. A circumferential edge of the contact lens 250 is designated with reference numeral 256.

Fig. 7 shows a perspective view of a lens blank 260 for the purpose of the manufacture of an intraocular lens. The lens blank comprises a central part with two convex sides 262, 264. A circumferential edge of the central part is designated with reference numeral 266. Adjacent to the circumferential edge is a kind of circular disc 268 which forms an integral part of the central part. The circular disc 268 will be partly removed in an aftertreatment to form haptics. This can be realized, for instance, by a milling operation. The lens blank 260 is therefore a semimanufacture which is yet to undergo an aftertreatment.

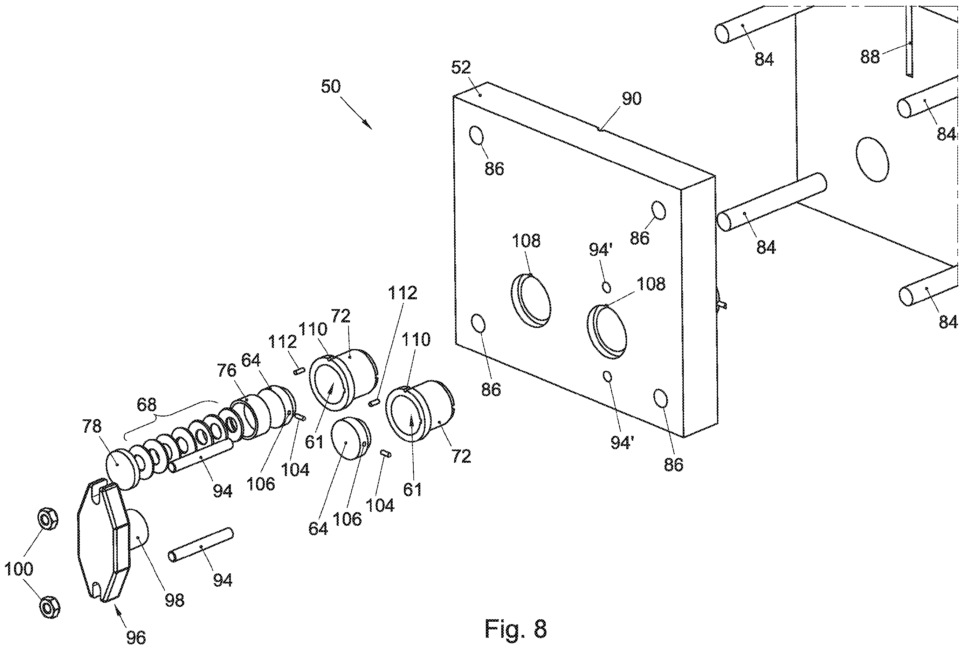

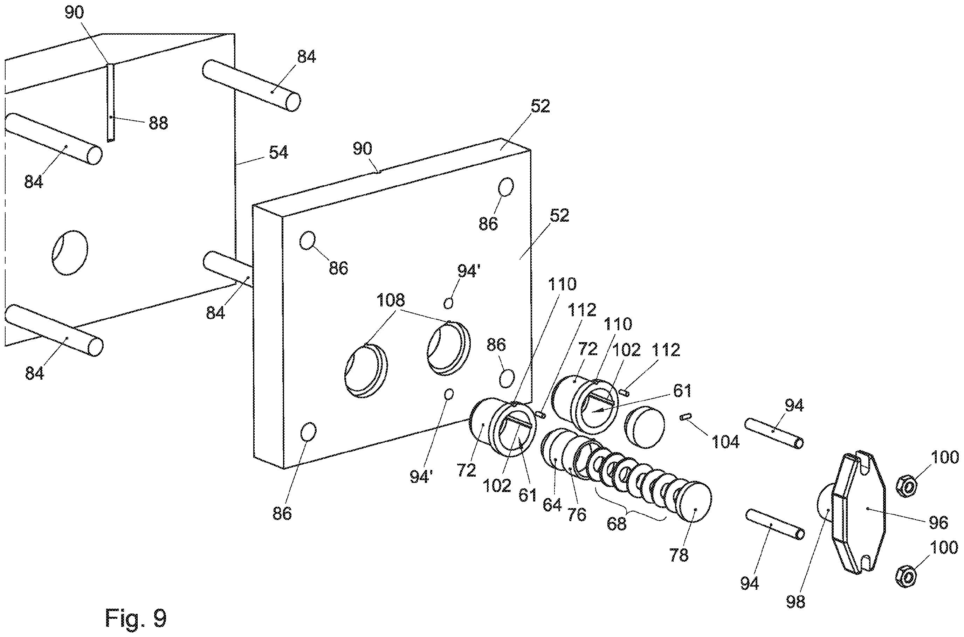

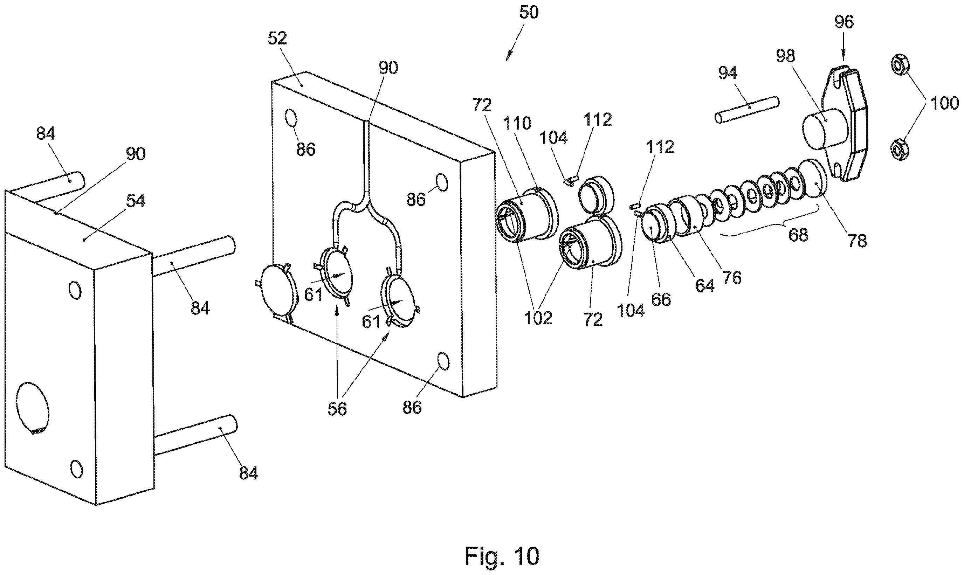

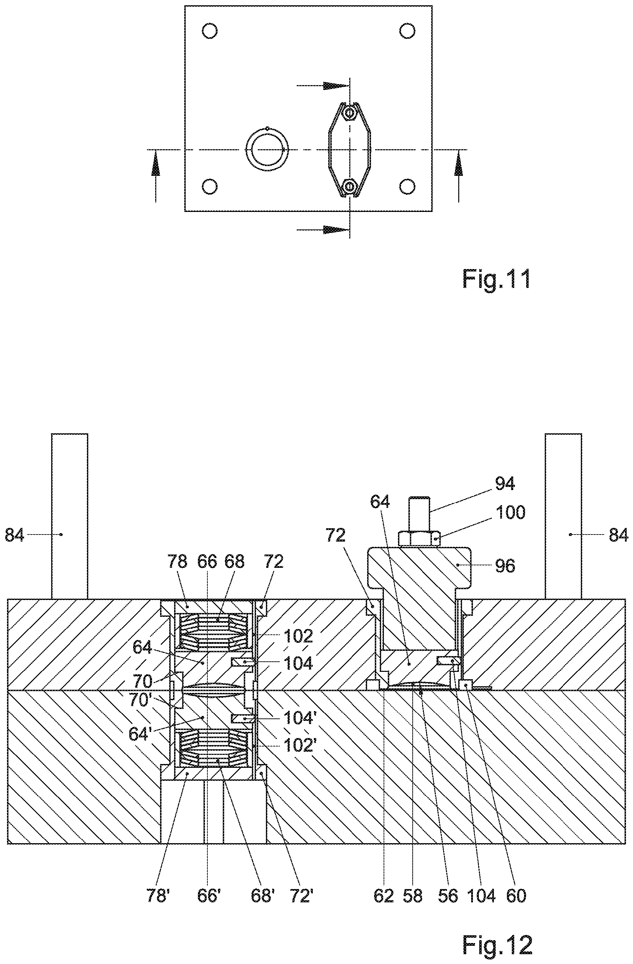

Figs. 8-13 show an example of an embodiment of an injection mold 50 that has been manufactured with the method according to the invention and which serves for the manufacture of a second cast mold half of a cast mold 10 for manufacturing contact lenses and/or intraocular lenses. A similar injection mold can also be used for direct injection molding of contact lenses or intraocular lenses. The example shown in fact includes two different embodiments, viz., one whereby the optical insert is set up rigidly (in Fig. 12 on the right) and one whereby the optical insert is set up movably, as described at length in applicant's previous application PCT/NL2012/050404.

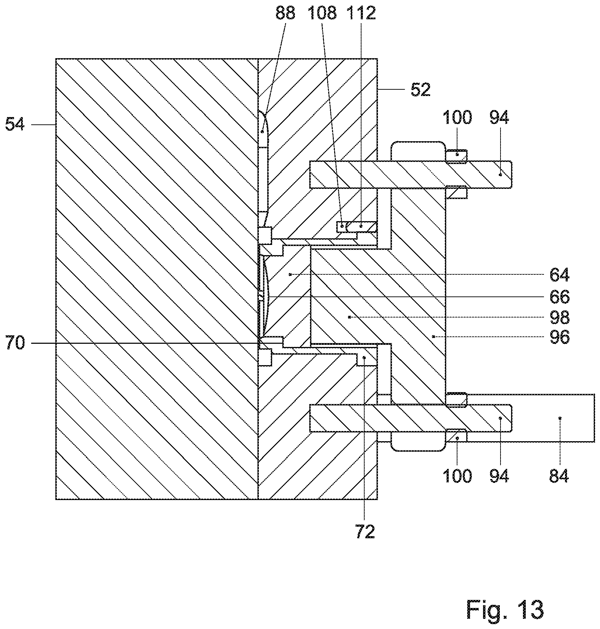

Figs. 8-10 show the injection mold 50 in exploded views from different viewpoints. Fig. 11 shows a front view and Figs. 12 and 13 show cross sections of the injection mold 50 in assembled and closed condition.

The injection mold is provided with a first injection mold half 52 and a second injection mold half 54. The injection mold 50 is provided with at least one injection mold cavity 56 for manufacturing an ophthalmic device. In the part of the injection mold represented in Fig. 12 on the right, the ophthalmic device is a second cast mold half 20. In the part of the injection mold 50 represented in Fig. 12 on the left, the ophthalmic device is a lens blank 260 for an intraocular lens. However, it can also be a contact lens 250. The injection mold cavity 56 is formed when the two injection mold halves 52, 54 are in a moved together, closed position. A possibility of setting up the two injection mold halves 52, 54 movably relative to each other is formed by guide pins 84 which are fixedly connected to the second injection mold half 54. The first injection mold half 52 is provided with guide holes 86 in which the guide pins 84 are fittingly and slidably received. This is only one possible solution for setting up the two injection mold halves 52, 54 movably relative to each other towards and away from each other. To each injection mold cavity 56 runs a plastic supply channel 88. To a supply opening 90, an outflow nozzle of an extruder (not shown) can be connected.

Depending on the type of ophthalmic device that is manufactured in the injection mold 50, the configuration of the injection mold cavity 56 will differ. In the part of the injection mold represented in Fig. 12 on the right, the ophthalmic device that is manufactured with the injection mold 50 is a second cast mold half 20. There, the injection mold cavity 56 is provided with a central part cavity 58, a bearing ring cavity 60, and a connecting cavity 62 which connects the central part cavity 58 with the bearing ring cavity 60. In the exemplary embodiment shown, the part represented in Fig. 12 on the left is an injection mold cavity for manufacturing a lens blank 260 for the purpose of manufacturing an intraocular lens. There, the injection mold cavity 56 is especially formed by a central part cavity 58 with two convex, optically accurately defined surfaces 66, 66'. While the example shown of the injection mold 50 is provided with two injection mold cavities 56, clearly, the injection mold 50 may also be provided with one or with more than two injection mold cavities 56.

For each injection mold cavity 56, the injection mold 50 is provided with at least one cylindrical optical insert 64 associated with the injection mold cavity 56. The optical insert 64 is provided with an end face having an optically accurately defined surface 66 which faces the injection mold cavity 56 and which bounds the injection mold cavity 56.

In the embodiment represented in Fig. 12 on the left, further, spring means 68 are associated with the injection mold cavity 56, which are biased such that the spring action thereof urges the optical insert 64 in the direction of the central part cavity 58 towards a pressed-in position. In that embodiment, the injection mold cavity 56 is associated with a first stop 70 which forms a boundary for the movement of the optical insert 64 to the pressed-in position. In the exemplary embodiment, the first stop 70 is included in a first bush 72 which is included in the first injection mold half 52. The optical insert 64 is provided with a stepped circumferential profile, the step 74 in the circumferential profile abutting against the first stop 70 when the optical insert 64 is in the pressed-in position. Instead of the first bush 72, the step 74 can also form an integral part of the first injection mold half 52. The first bush 72 is of advantage from the viewpoint of manufacturing technique. Moreover, by exchange of the bush 72, the inner diameter can be varied, and hence the outer diameter of the optical insert 64 included therein, and hence the diameter of the optically accurately defined surface 24 of the second cast mold half 20. Further, the example of the movable insert 64 which is represented in Fig. 12 on the left includes a second stop 74, associated with that injection mold cavity 56, which forms a boundary for the movement of optical insert 64 from the pressed-in position to a stop position moved away from the injection mold cavity 56. In the represented example of this embodiment, the second stop 74 is formed by a second bush 76 which is included in the first bush 72. Included in the first bush 72 are the optical insert 64, the second bush 76, and the spring means 68. Then, the first bush 72 is sealed off with a sealing lid 78. The connection between the sealing lid 78 and the first bush 72 or, when the first bush 72 is omitted, the first injection mold half 52, can be formed, for instance, by thread or by a bayonet connection. Such a detachable connection of the sealing lid 78 enables simple exchange of the optical insert 64 or replacement of the spring means 68. Replacement of the optical insert 64 is desired when another optically accurately defined surface 24 is desired. Replacing the spring means 68 may be desired when another spring constant is desired or upon breakage or slackening of the spring means 68.

The example represented in Fig. 12 on the right relates to an injection mold 50 in which the optical insert 64 is set up fixedly. With the aid of a press-on provision the optical insert 64 is pressed against the stop 70 and held in that fixed position. The press-on provision can be implemented in various manners. In the example shown, two thread ends 94 are fitted in corresponding threaded holes 94' in the injection mold half 52. A press-on block 96 provided with a cylindrical press-on cylinder 98 can, with the aid of nuts 100 which engage the thread ends 94, be pressed against the optical insert 64 for fixation of the optical insert 64 against the stop 70. The optical insert 64 is exchangeable, but once placed in the insert opening 61 and fixed by the press-on provision 94-100, the position of the optical insert in the injection mold half 52 is fixed.

As has already been described in the introduction, with ophthalmic devices 12, 20, 250, 260 with an optically accurately defined surface 14, 24 and positioning means 16-18, 26 or two optically accurately defined opposite surfaces 252, 254, 262, 264, it is of great importance that the optically accurately defined surface 14, 24, 252, 262 be accurately positioned both in a lateral sense and in a rotational sense relative to the positioning means 16-18, 26 or the opposite optically accurately defined surface 254, 264 or a circumferential edge 256 of the contact lens 250 or a circumferential edge 266 of the intraocular lens. In the claims, as a general term for the positioning means 16-18, 26 or the opposite optically accurately defined surface or the circumferential edge 256, 266, the term 'reference surface' is used, relative to which the optical surface 14, 16, 252, 262 has to be accurately positioned in lateral sense and rotational sense.

The invention provides a method of accomplishing this. In general terms the method reads as follows:
A method for manufacturing a cylindrical optical insert 64 for an injection mold for manufacturing an ophthalmic device 12; 20; 250; 260, such as a lens blank, a contact lens 250, an intraocular lens or a cast mold half 12, 20 for manufacturing a lens blank 260, a contact lens 250 or an intraocular lens or a lens blank 260. It is to be assumed here that the ophthalmic device 12; 20; 250; 260 is at least provided with:
   - an optically accurately defined surface 14; 24; 252; 262 which is not circularly symmetric about a central axis L but for instance toric, aspheric or bifocal or a combination thereof; and
   - at least one reference surface 16-18; 26; 254; 264; 256; 266 with respect to which the optically accurately defined surface 14; 24; 252; 262 is to be accurately positioned both in lateral directions and rotational direction.

The injection mold 50 in which the insert is used, as has already been indicated before, is provided with:
- a first injection mold half 52 having at least one cylindrical optical insert opening 61;
- at least one cylindrical optical insert 64, the optical insert 64 being provided with an optically accurately defined optical insert surface 66, the optical insert 64 being detachably included in the cylindrical optical insert opening 61;
- a second injection mold half 54 which together with the first injection mold half 52 with the optical insert 64 included therein determines in a closed position an injection mold cavity 56 in which the ophthalmic device 12; 20; 250; 260 with the at least one reference surface 16-18; 26; 254; 264; 256; 266 is injection molded and whereby the optically accurately defined optical insert surface 66 defines the optically accurately defined surface 14; 24; 252; 262 to be formed of the ophthalmic device 12, 20.

According to the invention the injection mold 50 is further provided with:
- a recess 102 or projection in the cylindrical optical insert opening 61 which comprises at least one positioning surface which extends in a direction parallel to the axis of the optical insert opening 61; and
- a stop 104 on the cylindrical optical insert 64, associated with the at least one positioning surface, which abuts against the at least one positioning surface for rotational orientation of the optical insert 64 in the cylindrical optical insert opening 61, the stop 104 on the cylindrical optical insert 64 being a stop surface or a stop pin 104 which is included in a pin recess 106 in the cylindrical optical insert 64.

The method comprises:
- manufacturing the optically accurately defined surface 66 of the optical insert 64 on a lathe 200 with a CNC control, the lathe 200 being provided with a clamping head 202 rotatable about a main axis A, whose rotational position is controllable, the lathe 200 being provided with a tool 204 which is controllably displaceable in a direction X substantially perpendicular to main axis A and in a direction Z parallel to the main axis A, whereby the optically accurately defined surface 66 is formed by controlled rotation of the clamping head 202 and controlled displacement of the tool 204, starting from a clamped position of the optical insert 64 in the clamping head 202;
- manufacturing the stop surface or the pin recess 106 of the optical insert 64 with a cutter or a drill 206 while the optical insert 64 is in the clamped position in the clamping head 202, whereby the CNC control defines the position of the stop surface or the pin recess 106 with respect to the optically accurately defined surface 66 through accurate rotational control of the clamping head 202 for positioning the optical insert 64 with respect to the cutter or drill 206.

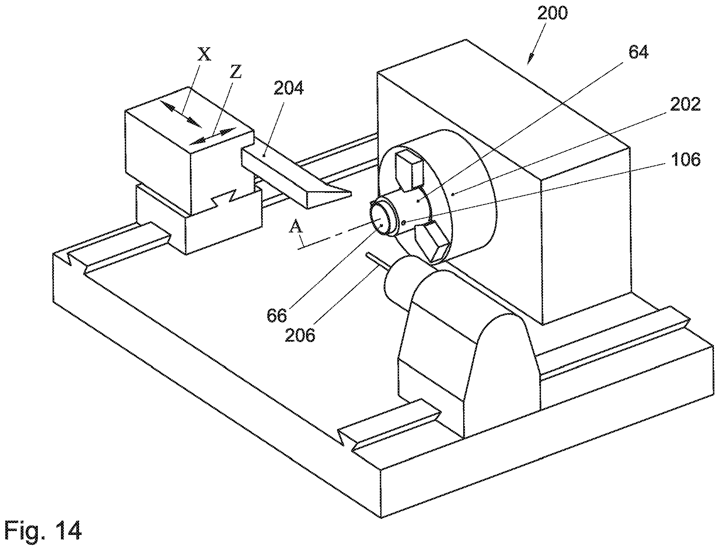

An example of a lathe on which the method can be carried out is represented in Fig. 14.

In an embodiment of the method, the CNC control of the lathe 200 can control the rotational position of the clamping head 202 by increments, the accuracy of the CNC control expressed in the number of increments per revolution being at least 3,000 increments per 360° and preferably about 4,000 increments per 360°.

Further, in an embodiment, the CNC control of the lathe 200 can control the position of the tool in the direction Z of the main axis A with a resolution that is less than 1 micron, and preferably with a resolution that is less than 0.1 micron.

In an embodiment the CNC control of the lathe 200 can control the position of the tool in the direction X perpendicular to the main axis with a resolution that is less than 1 micron, and preferably with a resolution that is less than 0.1 micron.

The injection mold 50 already described above with reference to Figs. 8-13 for manufacturing an ophthalmic device can be defined in most general terms as follows:
The injection mold 50 is intended for manufacturing an ophthalmic device such as a contact lens 250, an intraocular lens, a lens blank 260 or a cast mold half 12; 20 for manufacturing a contact lens 250, an intraocular lens or a lens blank 260, the ophthalmic device 12, 20; 250; 260 being at least provided with:
   - an optically accurately defined surface 14, 24; 252; 262 which is not circularly symmetric about a central axis L but for instance toric, aspheric or bifocal or a combination thereof; and
   - at least one reference surface 16-18, 26; 254, 256; 264, 266 with respect to which the optically accurately defined surface 14, 24; 252; 262 is to be accurately positioned both in lateral directions and rotational direction.
The injection mold 50 comprises in most general terms:
- a first injection mold half 52 having at least one cylindrical optical insert opening 61;
- at least one cylindrical optical insert 64 having an optically accurately defined optical insert surface 66, the optical insert 64 being detachably included in the cylindrical optical insert opening 61;
- a second injection mold half 54 which together with the first injection mold half 52 with the optical insert 64 included therein determines in a closed position an injection mold cavity 56 in which the ophthalmic device 12, 20; 250; 260 with the at least one reference surface 16-18; 26; 254, 256; 264, 266 is injection molded and whereby the optically accurately defined optical insert surface 66 defines the optically accurately defined surface 14; 24; 252; 262 to be formed of the ophthalmic device 12; 20; 250; 260;
- a recess or projection 102 in the cylindrical optical insert opening 61 which comprises at least one positioning surface which extends in a direction parallel to the axis of the optical insert opening 61;
- a stop 104 on the cylindrical optical insert 64, associated with the at least one positioning surface, which abuts against the at least one positioning surface 102 for rotational orientation of the optical insert 64 in the cylindrical optical insert opening 61, the stop on the cylindrical optical insert 64 being a stop surface or a stop pin 104 which is included in a pin recess 106 in the cylindrical optical insert 64, the optical insert 64 having been manufactured with the method according to any one of claims 1-4, in order for the stop surface or the pin recess 106 of the optical insert 64 to be so positioned with respect to the optical insert surface 66 in a rotational sense that the deviation of rotational position with respect to the desired rotational position is less than 0.12°, more particularly less than 0.09°.

0.12° corresponds to 360°/3000 and 0.09° corresponds to 360°/4000. 3000 and 4000 are the resolutions mentioned above (increments per revolution) with which the CNC control can control the main axis of the lathe in a circumferential sense. As the stop 104 of the optical insert 64, 64' is positioned very accurately in both lateral and rotational sense and relative to the accurately optically defined surface 66, 66' of the optical insert 64, 64', what is also accomplished is that the optically accurately defined surface 66, 66' of the optical insert 64, 64' can be positioned accurately with respect to other parts of the injection mold, which other parts form a reference surface 16-18, 26, 254 and/or 256 and 264 and/or 266. These other, reference surface-forming parts of the injection mold are therefore other parts of the injection mold cavity 56 which comprise, for instance, the positioning means 16-18 of the first cast mold half 12, positioning means 26 of the second cast mold half 20, the opposite accurately defined surface 254 of the contact lens 250 or the opposite optically accurately defined surface 264 of the intraocular lens 260.

In an embodiment the injection mold may be intended for manufacturing a cast mold half 12; 20. In that case the injection mold cavity 58 is configured for forming a cast mold half 12; 20 which is provided with:
- first positioning means 16-18; 26 which are configured for engagement of second positioning means 26; 16-18 of a second cast mold half 20 for rotational and lateral orientation of the cast mold half 12; 20 relative to the second cast mold half 20; 12, while the at least one reference surface 16-18; 26 with respect to which the optically accurately defined surface 14; 24 is to be accurately positioned forms part of the first positioning means 16-18; 26, so that upon placement of the second cast mold half 20 on the first cast mold half 12 an accurate rotational and lateral positioning of the second cast mold half 20 relative to the first cast mold half 12 is obtained.

Of such an embodiment, an example is shown in the right-hand part of Fig. 12.

In an alternative embodiment of the injection mold, it is intended for manufacturing an ophthalmic device in the form of a lens blank 260 for contact lens 250 or intraocular lens. Such an injection mold is, additionally to the optically accurately defined surface 252; 262, provided with a second optically accurately defined surface 254; 264 which is positioned opposite the first optically accurately defined surface 252; 262, the injection mold 50 being further provided with:
- at least one cylindrical second optical insert opening 61' which is included in the second injection mold half 54;
- at least one cylindrical second optical insert 64' having an optically accurately defined optical insert surface 66', the second optical insert 64' being detachably included in the second optical insert opening 66', the optically accurately defined optical insert surface 66' of the second optical insert 64 defining the second optically accurately defined surface 254; 264 to be formed of the ophthalmic device 250; 260;

- a recess or projection 102' in the second optical insert opening 61' which comprises at least one second positioning surface which extends in a direction parallel to the axis of the second optical insert opening 61';
- a second stop 104' on the second optical insert 64', associated with the at least one second positioning surface, which abuts against the at least one second positioning surface for rotational orientation of the second optical insert 64' in the second optical insert opening 61', the second stop on the second optical insert 64' being a stop surface or a stop pin 104' which is included in a pin recess 106' in the second optical insert 64', the second optical insert 64' having been manufactured with the method according to any one of claims 1-4, in order for the stop surface or the pin recess 106' of the second optical insert 64' to be so positioned relative to the optical insert surface 66' of the second optical insert 64' in a rotational sense that the deviation of rotational position with respect to the desired rotational position is less than 0.12°, more particularly, less than 0.09°.
Such an embodiment is shown in Fig. 12 on the left. 0.12° corresponds to 360°/3000 and 0.09° corresponds to 360°/4000. 3000 and 4000 are the resolutions mentioned earlier (increments per revolution) with which the CNC control can control the main axis of the lathe in a circumferential sense.

In an embodiment, the at least one reference surface relative to which the optically accurately defined surface 66 is to be accurately positioned can be the second optically accurately defined surface 66', so that both optically accurately defined surfaces 66, 66' on opposite sides of the contact lens 250 or intraocular lens 260 are accurately positioned with respect to each other in rotational and lateral direction. Such an embodiment is shown in Fig. 12 on the left.

In an embodiment, which may optionally be combined with the above-described embodiment, the at least one reference surface with respect to which the optically accurately defined surface is accurately positioned can be a circumferential edge 256; 266 of the ophthalmic device 12; 20; 250; 260, so that the optically accurately defined surface 66 is positioned accurately in a rotational and lateral direction with respect to the circumferential edge 256; 266 of the ophthalmic device 12; 20; 250; 260.

In the examples shown of the various embodiments, the optical insert 64, 64' is included in a bush 72 which is included in the first injection mold half 52 and a bush 72' which is included in the second injection mold half 54. Such a bush 72, 72', however, is not requisite for realizing the invention. The optical inserts 64, 64' may also be included directly in the respective injection mold half 52, 54, with omission of the bush 72, 72'. The bush is present in the examples because it is favorable from the viewpoint of manufacturing technique to thus form a stop 70 in the injection mold half 52, 54. Moreover, through exchange of the bush 72, 72', a different inner diameter may be provided, so that optical inserts 64, 64' of different diameters can be included in the injection mold half 52, 54. The bush 72, 72' can also serve to form therein the cavities for forming, for instance, the positioning means 26. To this end, the outer diameter of the bush 72, 72' will then have to be greater than shown in the examples. The cavities for forming the positioning means 26 may also, in an alternative embodiment, be formed in part in the injection mold halves 52, 54 themselves. When utilizing a bush 72 , 72' it is also important that the rotational position thereof is accurately determined in the injection mold half 52, 54. To this end, as shown, the injection mold half 52, 54 may be provided with a recess 108 and the bush 72, 72' likewise with a recess 110. With a dowel pin 112 the recesses 108 and 110 are thereupon aligned relative to each other. The recess 110 in the bush 72, 72' is also to be positioned very accurately with respect to the recess 102 in the cylindrical bush 72, 72'. This, too, can again be realized by manufacturing the bush 72, 72' on a lathe, whereby the recess 102 is manufactured in the same clamped setup as the recess 110, so that the rotational position is known to the CNC control during the manufacture of both recess 102 and recess 110. At a control accuracy of about 4,000 increments per revolution, the recess 110 can thus be positioned very accurately relative to the recess 102. Clearly, instead of an axial semicircular recess 108 in the injection mold 52, 54 also a kind of keyway-shaped recess may be provided. Instead of a recess 110 in the bush 72, 72', also a cross bore having a dowel pin included therein may be provided in a similar manner as with the insert 64. Further, it is possible that the bush 72, 72', instead of being provided with a bore 108, is provided with a projection which engages in the recess 110 of the injection mold half 52, 54 or vice versa. It is of importance that the pin, projection, or recess at the outer circumferential surface of the bush 72, 72' is provided very accurately with respect to the pin, projection or recess 102 at the inner circumferential surface of the bush 72, 72' and that this can be effected by providing both shaped elements in the bush 72, 72' without taking the bush 72, 72' out of the clamping head 202 of the CNC-controllable lathe 200 of high positioning resolution.

Further, a method is provided for manufacturing an ophthalmic device, comprising:
- providing an injection mold 50 according to the invention;
- injecting plastic into the injection mold cavity 58;
- curing of the plastic in the injection mold cavity 58; and
- removing the ophthalmic device 12; 20; 250; 260 from the injection mold cavity.

The ophthalmic device which is obtained with such a method can be a cast mold half 12; 20, a contact lens 250, an intraocular lens or a lens blank 260 and falls within the scope of the protection sought.

The method concerned can also be applied twice for manufacturing:
- a first cast mold half 12 with first positioning means 16-18; and
- a second cast mold half 20 with second positioning means 26 which are configured for cooperation with the first positioning means 16-18 for rotational and lateral positioning of the first cast mold half 12 relative to the second cast mold half 20.

Once the two cast mold halves are available, a method for manufacturing a contact lens or an intraocular lens or a lens blank can comprise the following steps:
- filling the first cast mold half 12 with a plastic;
- placing the second cast mold half 20 on the first cast mold half 12, such that the second positioning means 26 engage the first positioning means 16-18, the first and the second positioning means being configured for clamping the second cast mold half 20 on the first cast mold half 12 under a bias;
- curing of the plastic in the cast mold 10 for forming the lens 250 or lens blank 260;
- removing the second cast mold half 20; and
- sealing the first cast mold half 12 in which the lens 250; 260 is situated with a seal 36 so as to form a package from the first cast mold half 12 and the seal 36, in which package lens 250 or lens blank 260 is included.

Possibly, prior to applying the seal 36 a liquid may be introduced into the first cast mold half 12.

The contact lens or an intraocular lens 250 or lens blank 260 which is manufactured with this method also falls within the scope of the protection sought.

While the invention has been represented and described in detail with reference to the drawings, the drawings and description should be regarded as an example only. The invention is not limited to the embodiments described. Features described in dependent claims may be combined with each other. Reference numerals in the claims must not be construed as limitations on the claims but merely serve for clarification. When in the foregoing reference is made to an ophthalmic device, this is understood to mean not only a contact lens or intraocular lens but also a lens blank for forming such a lens. Thus a lens blank may undergo an aftertreatment for, for instance, forming haptics in the case of an intraocular lens or possibly for finishing a circumferential edge in the case of a contact lens, though this last will generally not be necessary. In the case of an intraocular lens the semimanufacture can comprise a lens blank 260, an example of which is represented in Fig. 7.

## Claims

1. A method for manufacturing a cylindrical optical insert (64) for an injection mold for manufacturing an ophthalmic device (12; 20; 250; 260), such as a lens blank, a contact lens, an intraocular lens or a cast mold half for manufacturing a lens blank, a contact lens or an intraocular lens, the ophthalmic device (12; 20; 250; 260) being at least provided with:
• an optically accurately defined surface (14; 24; 252; 262) which is not circularly symmetric about a central axis (L) but for instance toric, aspheric or bifocal or a combination thereof; and
• at least one reference surface (16-18; 26; 254; 264, 256; 266) with respect to which the optically accurately defined surface (14; 24; 252; 262) is to be accurately positioned both in lateral directions and rotational direction;
the injection mold (50) comprising:
• a first injection mold half (52) having at least one cylindrical optical insert opening (61);
• at least one cylindrical optical insert (64), the optical insert (64) being provided with an optically accurately defined optical insert surface (66, 66'), the optical insert (64) being detachably included in the cylindrical optical insert opening (61);
• a second injection mold half (54) which together with the first injection mold half (52) with the optical insert (64) included therein determines in a closed position an injection mold cavity (56) in which the ophthalmic device (12; 20; 250; 260) with the at least one reference surface (16-18, 26; 254; 264; 256; 266) is injection molded and whereby the optically accurately defined optical insert surface (66) defines the optically accurately defined surface (14; 24; 252; 262) to be formed of the ophthalmic device (12, 20);
• a recess (102) or projection in the cylindrical optical insert opening (61) which comprises at least one positioning surface which extends in a direction parallel to the axis of the optical insert opening (61);
• a stop (104) on the cylindrical optical insert (64), associated with the at least one positioning surface, which abuts against the at least one positioning surface for rotational orientation of the optical insert (64) in the cylindrical optical insert opening (61), the stop (104) on the cylindrical optical insert (64) being a stop surface or a stop pin (104) which is included in a pin recess (106) in the cylindrical optical insert (64);
the method comprising:
• manufacturing the optically accurately defined surface (66) of the optical insert (64) on a lathe (200) with a CNC control, the lathe (200) being provided with a clamping head (202) rotatable about a main axis (A), whose rotational position is controllable, the lathe (200) being provided with a tool (204) which is controllably displaceable in a direction (X) substantially perpendicular to main axis (A) and in a direction (Z) parallel to the main axis (A), whereby the optically accurately defined surface (66) is formed by controlled rotation of the clamping head (202) and controlled displacement of the tool (204), starting from a clamped position of the optical insert (64) in the clamping head (202);
• manufacturing the stop surface or the pin recess (106) of the optical insert (64) with a cutter or a drill (206) while the optical insert (64) is in said clamped position in the clamping head (202), the CNC control defining the position of the stop surface or the pin recess (106) with respect to the optically accurately defined surface (66) through accurate rotational control of the clamping head (202) for positioning the optical insert (64) with respect to the cutter or drill (206).

2. The method according to claim 1, wherein the CNC control of the lathe (200) controls the rotational position of the clamping head (202) by increments, the accuracy of the CNC control expressed in the number of increments per revolution being at least 3,000 increments per 360° and preferably being about 4,000 increments per 360°.

3. The method according to claim 1 or 2, wherein the CNC control of the lathe (200) controls the position of the tool in the direction (Z) of main axis (A) with a resolution that is less than 1 micron, and preferably with a resolution that is less than 0.1 micron.

4. The method according to any one of claims 1-3, wherein the CNC control of the lathe (200) controls the position of the tool in the direction (X) perpendicular to the main axis with a resolution that is less than 1 micron, and preferably with a resolution that is less than 0.1 micron.

5. A method for manufacturing an injection mold (50) for manufacturing an ophthalmic device, such as a lens blank (260), a contact lens (250), an intraocular lens or a cast mold half (12; 20) for manufacturing a lens blank (260), a contact lens (250) or an intraocular lens, the ophthalmic device (12, 20; 250; 260) being at least provided with:
• an optically accurately defined surface (14, 24; 252; 262) which is not circularly symmetric about a central axis (L) but for instance toric, aspheric or bifocal or a combination thereof; and
• at least one reference surface (16-18, 26; 254, 256; 264, 266) with respect to which the optically accurately defined surface (14, 24; 252; 262) is to be accurately positioned both in lateral directions and rotational direction;
the method comprising providing an injection mold (50) by:
• providing a first injection mold half (52) having at least one cylindrical optical insert opening (61);
• manufacturing at least one cylindrical optical insert (64) having an optically accurately defined optical insert surface (66);
• detacheably receiving the optical insert (64) in the cylindrical optical insert opening (61);
• providing a second injection mold half (54) which together with the first injection mold half (52) having the optical insert (64) included therein determines in a closed position an injection mold cavity (56) in which the ophthalmic device (12, 20; 250; 260) with the at least one reference surface (16-18; 26; 254, 256; 264, 266) is injection molded and whereby the optically accurately defined optical insert surface (66) defines the optically accurately defined surface (14; 24; 252; 262) to be formed of the ophthalmic device (12, 20).
• providing a recess or projection (102) in the cylindrical optical insert opening (61) which comprises at least one positioning surface which extends in a direction parallel to the axis of the optical insert opening (61);
• wherein the manufacturing of the at least one cylindrical optical insert (64) is performed with the method according to any one of claims 1-4 to provide the stop (104) on the cylindrical optical insert (64) that is associated with the at least one positioning surface and which abuts against the at least one positioning surface (102) for rotational orientation of the optical insert (64) in the cylindrical optical insert opening (61), the stop on the cylindrical optical insert (64) being the stop surface or a stop pin (104) which is included in the pin recess (106) in the cylindrical optical insert (64), wherein the stop surface or the pin recess (106) of the optical insert (64) is so positioned with respect to the optical insert surface (66) in a rotational sense that the deviation of rotational position with respect to the desired rotational position is less than 0.12°, more particularly less than 0.09°.

6. The method according to claim 5, wherein the ophthalmic device is a cast mold half (12; 20) for manufacturing a lens blank (260), a contact lens (250) or an intraocular lens, injection mold cavity (58) being configured for forming a cast mold half (12; 20) which is provided with
• first positioning means (16-18; 26) which are configured for engagement of second positioning means (26; 16-18) of a second cast mold half (20) for rotational and lateral orientation of the cast mold half (12; 20) with respect to the second cast mold half (20; 12), while the at least one reference surface (16-18; 26) with respect to which the optically accurately defined surface (14; 24) is to be accurately positioned forms part of the first positioning means (16-18; 26), so that upon placement of the second cast mold half (20) on the first cast mold half (12) an accurate rotational and lateral positioning of the second cast mold half (20) with respect to the first cast mold half (12) is obtained.

7. The method according to claim 5, wherein the ophthalmic device is a lens blank (260), a contact lens (250) or intraocular lens, which, additionally to the optically accurately defined surface (252; 262), is provided with a second optically accurately defined surface (254; 264) which is positioned opposite the first optically accurately defined surface (252; 262), wherein the method for manufacturing the injection mold (50) further includes:
• providing at least one cylindrical second optical insert opening (61') which is included in the second injection mold half (54);
• manufacturing at least one cylindrical second optical insert (64') having an optically accurately defined optical insert surface (66');
• detacheably receiving the second optical insert (64') in the second optical insert opening (61'), the optically accurately defined optical insert surface (66') of the second optical insert (64') defining the second optically accurately defined surface to be formed (254; 264) of the ophthalmic device (250; 260).
• providing a recess or projection (102') in the second optical insert opening (61') which comprises at least one second positioning surface which extends in a direction parallel to the axis of the second optical insert opening (61');
• wherein the manufacturing of the at least one cylindrical second optical insert (64') is performed with the method according to any one of claims 1-4 to provide a second stop (104') on the second optical insert (64') that is associated with the at least one second positioning surface and which abuts against the at least one second positioning surface for rotational orientation of the second optical insert (64') in the second optical insert opening (61'), the second stop on the second optical insert being the stop surface or a stop pin (104') which is included in the pin recess (106') in the second optical insert (64'), wherein the stop surface or the pin recess (106') of the second optical insert (64') is so positioned with respect to the optical insert surface (66') of the second optical insert (64') in rotational sense that the deviation of rotational position with respect to the desired rotational position is less than 0.12°, more particularly less than 0.09°.

8. The method according to claim 7, wherein the at least one reference surface with respect to which the optically accurately defined surface (66) is to be accurately positioned is the second optically accurately defined surface (66'), so that both optically accurately defined surfaces (66, 66') on opposite sides of the contact lens (250) or intraocular lens (260) are accurately positioned with respect to each other in rotational and lateral direction.

9. The method according to claim 5, wherein the at least one reference surface with respect to which the optically accurately defined surface is accurately positioned is a circumferential edge (256; 266) of the ophthalmic device (12; 20; 250; 260), so that the optically accurately defined surface (66) is positioned accurately in a rotational and lateral direction with respect to the circumferential edge (256; 266) of the ophthalmic device (12; 20; 250; 260).

10. A method for manufacturing an ophthalmic device, comprising:
• providing an injection mold (50) with the method according to any one of claims 5-9;
• injecting plastic into the injection mold cavity (58);
• curing of the plastic in the injection mold cavity (58); and
• removing the ophthalmic device (12; 20; 250; 260) from the injection mold cavity.

11. A method for manufacturing a cast mold (10) for manufacturing a contact lens (250), a lens blank (260) or an intraocular lens, the cast mold (10) being provided with:
• a first cast mold half (12) with first positioning means (16-18); and
• a second cast mold half (20) with second positioning means (26) which are configured for cooperation with the first positioning means (16-18) for rotational and lateral positioning of the first cast mold half (12) with respect to the second cast mold half (20);
the method comprising:
• using the method according to claim 10 for manufacturing a first cast mold half (12); and
• using the method according to claim 10 for manufacturing a second cast mold half (20).

12. A method for manufacturing a contact lens or an intraocular lens comprising:
• using the method according to claim 11 for providing a first and a second cast mold half (12, 20);
• filling the first cast mold half (12) with a plastic;
• placing the second cast mold half (20) on the first cast mold half (12) such that the second positioning means (26) engage the first positioning means (16-18), the first and the second positioning means being configured for clamping the second cast mold half (20) on the first cast mold half (12) under a bias;
• curing of the plastic in the cast mold (10) for forming the lens (250) or lens blank (260);
• removing the second cast mold half (20); and
• sealing the first cast mold half (12) in which the lens (250) or lens blank (260) is situated with a seal (36) for forming a package from the first cast mold half (12) and the seal (36), in which package lens (250) or lens blank (260) is included.

13. The method according to claim 12, wherein prior to applying the seal (36) a liquid is introduced into the first cast mold half (12).

## Patentansprüche

1. Verfahren zur Herstellung eines zylindrischen optischen Einsatzes (64) für eine Spritzgießform zur Herstellung eines ophthalmischen Elements (12; 20; 250; 260), wie etwa eines Linsenrohlings, einer Kontaktlinse, einer Intraokularlinse oder einer Gießformhälfte zur Herstellung eines Linsenrohlings, einer Kontaktlinse oder einer Intraokularlinse, das ophthalmische Element (12; 20; 250; 260) mindestens versehen mit:
• einer optisch präzise definierten Oberfläche (14; 24; 252; 262), die nicht kreisförmig symmetrisch um eine Mittelachse (L) ist, sondern zum Beispiel torisch, asphärisch oder bifokal oder eine Kombination davon ist; und
• mindestens einer Referenzoberfläche (16-18; 26; 254; 264, 256; 266), in Bezug auf welche die optisch präzise definierte Oberfläche (14; 24; 252; 262) präzise in lateralen Richtungen wie auch Drehrichtung positioniert werden soll;
die Spritzgießform (50) umfassend:
• eine erste Spritzgießformhälfte (52) mit mindestens einer zylindrischen optischen Einsatzöffnung (61);
• mindestens einen zylindrischen optischen Einsatz (64), der optische Einsatz (64) versehen mit einer optisch präzise definierten Einsatzoberfläche (66, 66'), der optische Einsatz (64) lösbar in der zylindrischen optischen Einsatzöffnung (61) eingeschlossen;
• eine zweite Spritzgießformhälfte (54), die zusammen mit der ersten Spritzgießformhälfte (52) mit dem darin eingeschlossenen optischen Einsatz (64) in einer geschlossenen Position einen Spritzgießformhohlraum (56) bestimmt, in dem das ophthalmische Element (12; 20; 250; 260) mit der mindestens einen Referenzoberfläche (16-18, 26; 254; 264; 256; 266) spritzgegossen wird und wobei die optisch präzise definierte optische Einsatzoberfläche (66) die optisch präzise definierte Oberfläche (14; 24; 252; 262), die von dem ophthalmischen Element (12, 20) geformt werden soll, definiert;
• eine Vertiefung (102) oder einen Vorsprung in der zylindrischen optischen Einsatzöffnung (61), die/der mindestens eine Positionierungsoberfläche umfasst, die in einer Richtung parallel zu der Achse der optischen Einsatzöffnung (61) verläuft;
• einen Anschlag (104) auf dem zylindrischen optischen Einsatz (64), verbunden mit mindestens einer Positionierungsoberfläche, der gegen die mindestens eine Positionierungsoberfläche stößt, zur drehenden Ausrichtung des optischen Einsatzes (64) in der zylindrischen optischen Einsatzöffnung (61), welcher Anschlag (104) auf dem zylindrischen optischen Einsatz (64) eine Anschlagoberfläche oder ein Anschlagstift (104) ist, eingeschlossen in einer Stiftvertiefung (106) in dem zylindrischen optischen Einsatz (64);
das Verfahren umfassend:
• die Herstellung der optisch präzise definierten Oberfläche (66) des optischen Einsatzes (64) auf einer Drehbank (200) mit einer CNC-Steuerung, die Drehbank (200) versehen mit einem Klemmkopf (202), drehbar um eine Hauptachse (A), deren Drehposition steuerbar ist, die Drehbank (200) versehen mit einem Werkzeug (204), das in einer Richtung (X) im Wesentlichen senkrecht zur Hauptachse (A) und in einer Richtung (Z) parallel zur Hauptachse (A) steuerbar verschiebbar ist, wobei die optisch präzise definierte Oberfläche (66) durch gesteuerte Drehung des Klemmkopfes (202) und gesteuerte Verschiebung des Werkzeugs (204), ausgehend von einer geklemmten Position des optischen Einsatzes (64) in dem Klemmkopf (202) geformt wird;
• die Herstellung der Anschlagoberfläche oder der Stiftvertiefung (106) des optischen Einsatzes (64) mit einem Schneider oder einem Bohrer (206), während der optische Einsatz (64) in der geklemmten Position in dem Klemmkopf (202) ist, die CNC-Steuerung definierend die Position der Anschlagoberfläche oder der Stiftvertiefung (106) in Bezug auf die optisch präzise definierte Oberfläche (66) durch präzise drehende Steuerung des Klemmkopfes (202) zum Positionieren des optischen Einsatzes (64) in Bezug auf den Schneider oder Bohrer (206).

2. Verfahren nach Anspruch 1, wobei die CNC-Steuerung der Drehbank (200) die drehende Position des Klemmkopfes (202) durch Inkremente steuert, die Genauigkeit der CNC-Steuerung ausgedrückt in der Anzahl der Inkremente pro Umdrehung, die mindestens 3.000 Inkremente pro 360° und bevorzugt ungefähr 4.000 Inkremente pro 360° beträgt.

3. Verfahren nach Anspruch 1 oder 2, wobei die CNC-Steuerung der Drehbank (200) die Position des Werkzeugs in der Richtung (Z) der Hauptachse (A) mit einer Auflösung steuert, die weniger als 1 Mikron beträgt, und bevorzugt mit einer Auflösung, die weniger als 0,1 Mikron beträgt.

4. Verfahren nach einem der Ansprüche 1-3, wobei die CNC-Steuerung der Drehbank (200) die Position des Werkzeugs in der Richtung (X) senkrecht zu der Hauptachse mit einer Auflösung steuert, die weniger als 1 Mikron beträgt, und bevorzugt mit einer Auflösung, die weniger als 0,1 Mikron beträgt.

5. Verfahren zur Herstellung einer Spritzgießform (50) zur Herstellung eines ophthalmischen Elements wie etwa eines Linsenrohlings (260), einer Kontaktlinse (250), einer Intraokularlinse oder einer Spritzgießformhälfte (12; 20) zur Herstellung eines Linsenrohlings (260), einer Kontaktlinse (250) oder einer Intraokularlinse, das ophthalmische Element (12; 20; 250; 260) mindestens versehen mit:
• einer optisch präzise definierten Oberfläche (14; 24; 252; 262), die nicht kreisförmig symmetrisch um eine Mittelachse (L) ist, sondern zum Beispiel torisch, asphärisch oder bifokal oder eine Kombination davon; und
• mindestens einer Referenzoberfläche (16-18, 26; 254; 256, 264; 266) in Bezug auf welche die optisch präzise definierte Oberfläche (14; 24; 252; 262) präzise in lateralen Richtungen wie auch in Drehrichtung positioniert werden muss;
das Verfahren umfassend die Bereitstellung einer Spritzgießform (50) durch:
• die Bereitstellung einer ersten Spritzgießformhälfte (52) mit mindestens einer zylindrischen optischen Einsatzöffnung (61);
• die Herstellung von mindestens einem zylindrischen optischen Einsatz (64) mit einer optisch präzise definierten Einsatzoberfläche (66);
• die lösbare Aufnahme des optischen Einsatzes (64) in der zylindrischen optischen Einsatzöffnung (61);
• die Bereitstellung einer zweiten Spritzgießformhälfte (54), die zusammen mit der ersten Spritzgießformhälfte (52) mit dem darin eingeschlossenen optischen Einsatz (64) in einer geschlossenen Position einen Spritzgießformhohlraum (56) bestimmt, in dem das ophthalmische Element (12, 20; 250; 260) mit der mindestens einen Referenzoberfläche (16-18; 26; 254; 256; 264; 266) spritzgegossen wird und wobei die optisch präzise definierte optische Einsatzoberfläche (66) die optisch präzise definierte Oberfläche (14; 24; 252; 262), die von dem ophthalmischen Element (12, 20) geformt werden soll, definiert;
• die Bereitstellung einer Vertiefung (102) oder eines Vorsprungs in der zylindrischen optischen Einsatzöffnung (61), die/der mindestens eine Positionierungsoberfläche umfasst, die in einer Richtung parallel zu der Achse der optischen Einsatzöffnung (61) verläuft;
• wobei die Herstellung des mindestens einen optischen Einsatzes (64) mit dem Verfahren nach einem der Ansprüche 1-4 durchgeführt wird, um den Anschlag (104) auf dem zylindrischen optischen Einsatz (64) bereitzustellen, der verbunden ist mit der mindestens einen Positionierungsoberfläche und der gegen die mindestens eine Positionierungsoberfläche (102) stößt, für drehende Ausrichtung des optischen Einsatzes (64) in der zylindrischen optischen Einsatzöffnung (61), welcher Anschlag auf dem zylindrischen optischen Einsatz (64) die Anschlagoberfläche oder ein Anschlagstift (104) ist, die/der in der Stiftvertiefung (106) in dem zylindrischen optischen Einsatz (64) eingeschlossen ist, wobei die Anschlagoberfläche oder die Stiftvertiefung (106) des optischen Einsatzes (64) in Bezug auf die optische Einsatzoberfläche (66) in einer Drehrichtung so positioniert ist, dass die Abweichung der Drehposition in Bezug auf die gewünschte Drehposition weniger als 0,12° ist, insbesondere wenigere als 0,09°.

6. Verfahren nach Anspruch 5, wobei das ophthalmische Element eine Spritzgießhälfte (12; 20) zur Herstellung eines Linsenrohlings (260), einer Kontaktlinse (250) oder einer Intraokularlinse ist, der Spritzgießformhohlraum (58) konfiguriert zum Formen einer Spritzgießformhälfte (12; 20), die versehen ist mit
ersten Positionierungsmitteln (16-18; 26), die konfiguriert sind zum Eingreifen mit zweiten Positionierungsmitteln (26; 16-18) einer zweiten Spritzgießformhälfte (20) für drehende und laterale Ausrichtung der Spritgießformhälfte (12; 20) in Bezug auf die zweite Spritzgießformhälfte (20; 12), während die mindestens eine Referenzoberfläche (16-18; 26), in Bezug auf welche die optisch präzise definierte Oberfläche (14; 24) präzise positioniert werden soll, einen Teil der ersten Positionierungsmittel (16-18; 26) bildet, sodass beim Platzieren der zweiten Spritzgießformhälfte (20) auf der ersten Spritzgießformhälfte (12) eine präzise drehende und laterale Positionierung der zweiten Spritzgießformhälfte (20) in Bezug auf die erste Spritzgießformhälfte (12) bekommen wird.

7. Verfahren nach Anspruch 5, wobei das ophthalmische Element ein Linsenrohling (260), eine Kontaktlinse (250) oder eine Intraokularlinse ist, der/die zusätzlich zu der optisch präzise definierten Oberfläche (252; 262) versehen ist mit einer zweiten optisch präzise definierten Oberfläche (254; 264), die gegenüber der ersten optisch präzise definierten Oberfläche (252; 262) positioniert ist, wobei das Verfahren zur Herstellung der Spritzgießform (50) ferner Folgendes umfasst:
• die Bereitstellung von mindestens einer zylindrischen zweiten optischen Einsatzöffnung (61'), die in die zweite Spritzgießformhälfte (54) eingeschlossen ist;
• die Herstellung von mindestens einem zylindrischen zweiten optischen Einsatz (64') mit einer optisch präzise definierten optischen Einsatzoberfläche (66');
• das lösbare Aufnehmen des zweiten optischen Einsatzes (64') in die zweite optische Einsatzöffnung (61'), die optisch präzise definierte optische Einsatzoberfläche (66') des zweiten optischen Einsatzes (64'), definierend die zu formende zweite optisch präzise definierte Oberfläche (254; 264) des ophthalmischen Elements (250; 260);
• die Bereitstellung einer Vertiefung oder eines Vorsprungs (102') in der zweiten optischen Einsatzöffnung (61'), welche(r) mindestens eine zweite Positionierungsoberfläche umfasst, die in einer Richtung parallel zu der Achse der zweiten optischen Einsatzöffnung (61') verläuft;
• wobei die Herstellung des mindestens einen zylindrischen zweiten optischen Einsatzes (64') mit dem Verfahren nach einem der Ansprüche 1-4 durchgeführt wird, um einen zweiten Anschlag (104') auf dem zweiten optischen Einsatz (64') bereitzustellen, der mit der mindestens einen zweiten Positionierungsoberfläche verbunden ist und der gegen die mindestens eine zweite Positionierungsoberfläche stößt, für drehende Ausrichtung des zweiten optischen Einsatzes (64') in der zweiten optischen Einsatzöffnung (61'), welcher zweite Anschlag auf dem zweiten optischen Einsatz die Anschlagoberfläche oder ein Anschlagstift (104') ist, die/der in die Stiftvertiefung (106') in dem zweiten optischen Einsatz (64') eingeschlossen ist, wobei die Anschlagoberfläche oder die Stiftvertiefung (106') des zweiten optischen Einsatzes (64') in Bezug auf die optische Einsatzoberfläche (66') des zweiten optischen Einsatzes (64') in Drehrichtung so positioniert ist, dass die Abweichung der Drehposition in Bezug auf die gewünschte Drehposition weniger als 0,12° ist, insbesondere weniger als 0,09°.

8. Verfahren nach Anspruch 7, wobei die mindestens eine Referenzoberfläche, in Bezug auf welche die optisch präzise definierte Oberfläche (66) präzise positioniert werden soll, die zweite optisch präzise definierte Oberfläche (66') ist, sodass beide optisch präzise definierten Oberflächen (66, 66') auf gegenüberliegenden Seiten der Kontaktlinse (250) oder der Intraokularlinse (260) zueinander in drehender und lateraler Richtung präzise positioniert sind.

9. Verfahren nach Anspruch 5, wobei die mindestens eine Referenzoberfläche, in Bezug auf welche die optisch präzise definierte Oberfläche präzise positioniert wird, eine Umfangkante (256; 266) des ophthalmischen Elements (12; 20; 250; 260) ist, sodass die optisch präzise definierte Oberfläche (66) in drehender und lateraler Richtung in Bezug auf die Umfangkante (256; 266) des ophthalmischen Elements (12; 20; 250; 260) präzise positioniert wird.

10. Verfahren zur Herstellung eines ophthalmischen Elements, umfassend:
• die Bereitstellung einer Spritzgießform (50) mit dem Verfahren nach einem der Ansprüche 5-9;
• das Einspritzen von Kunststoff in den Spritzgießformhohlraum (58);
• das Aushärten des Kunststoffs in dem Spritzgießformhohlraum (58); und
• das Entfernen des ophthalmischen Elements (12; 20; 250; 260) aus dem Spritzgießformhohlraum.

11. Verfahren zur Herstellung einer Spritzgießform (10) zur Herstellung einer Kontaktlinse (250), eines Linsenrohlings (260) oder einer Intraokularlinse, die Spritzgießform (10) versehen mit:
• einer ersten Spritzgießformhälfte (12) mit ersten Positionierungsmitteln (16-18); und
• einer zweiten Spritzgießformhälfte (20) mit zweiten Positionierungsmitteln (26), die zum Zusammenarbeiten mit den ersten Positionierungsmitteln (16-18) konfiguriert sind, für drehende und laterale Positionierung der ersten Spritzgießformhälfte (12) in Bezug auf die zweite Spritzgießformhälfte (20);
das Verfahren umfassend:
• die Verwendung des Verfahrens nach Anspruch 10 zur Herstellung einer ersten Spritzgießformhälfte (12); und
• die Verwendung des Verfahrens nach Anspruch 10 zur Herstellung einer zweiten Spritzgießformhälfte (20).

12. Verfahren zur Herstellung einer Kontaktlinse oder einer Intraokularlinse, umfassend:
• die Verwendung eines Verfahrens nach Anspruch 11 zur Bereitstellung einer ersten und einer zweiten Spritzgießformhälfte (12, 20);
• das Fülle der ersten Spritzgießformhälfte (12) mit einem Kunststoff;
• das Platzieren der zweiten Spritzgießformhälfte (20) auf die erste Spritzgießformhälfte (12), sodass die zweiten Positionierungsmittel (26) in die ersten Positionierungsmittel (16-18) greifen, welche ersten und zweiten Positionierungsmittel konfiguriert sind zum Klemmen der zweiten Spritzgießformhälfte (20) auf die erste Spritzgießformhälfte (12) unter einer Neigung;
• das Aushärten des Kunststoffs in der Spritzgießform (10) zum Formen der Linse (250) oder des Linsenrohlings (260);
• das Entfernen der zweiten Spritzgießformhälfte (20); und
• das Versiegeln der ersten Spritzgießformhälfte (12), in der sich die Linse (250) oder der Linsenrohling (260) befindet, mit einem Siegel (36), um aus der ersten Spritzgießformhälfte (12) und dem Siegel (36) ein Paket zu bilden, in welchem Paket die Linse (250) oder der Linsenrohling (260) eingeschlossen ist.

13. Verfahren nach Anspruch 12, wobei vor dem Anbringen des Siegels (36) eine Flüssigkeit in die erste Spritzgießformhälfte (12) eingeführt wird.

## Revendications

1. Procédé pour fabriquer un insert optique cylindrique (64) pour un moule d'injection afin de fabriquer un dispositif ophtalmique (12 ; 20 ; 250 ; 260), telle qu'une ébauche de lentille, une lentille de contact, une lentille intraoculaire ou un demi-moule de coulée pour fabriquer une ébauche de lentille, une lentille de contact ou une lentille intraoculaire, le dispositif ophtalmique (12 ; 20 ; 250 ; 260) étant au moins prévu avec :
une surface précisément définie par voie optique (14 ; 24 ; 252 ; 262) qui n'est pas circulairement symétrique autour d'un axe central (L), mais par exemple torique, asphérique ou bifocale ou leur combinaison ; et
au moins une surface de référence (16-18 ; 26 ; 254 ; 264 ; 256 ; 266) par rapport à laquelle la surface précisément définie par voie optique (14 ; 24 ; 252 ; 262) doit être précisément positionnée à la fois dans les directions latérales et dans la direction de rotation ;
le moule d'injection (50) comprenant :
un premier demi-moule d'injection (52) ayant au moins une ouverture d'insert optique cylindrique (61) ;
au moins un insert optique cylindrique (64), l'insert optique (64) étant prévu avec une surface d'insert optique précisément définie par voie optique (66, 66'), l'insert optique (64) étant inclus de manière détachable dans l'ouverture d'insert optique cylindrique (61) ;
un second demi-moule d'injection (54) qui conjointement avec le premier demi-moule d'injection (52) avec l'insert optique (64) inclus dans ce dernier détermine dans une position fermée une cavité de moule d'injection (56), dans laquelle le dispositif ophtalmique (12 ; 20 ; 250 ; 260) avec la au moins une surface de référence (16-18 ; 26 ; 254 ; 264 ; 256 ; 266) est moulé par injection et moyennant quoi la surface d'insert optique précisément définie par voie optique (66) définit la surface précisément définie par voie optique (14 ; 24 ; 252 ; 262) à former du dispositif ophtalmique (12, 20) ;
un évidement (102) ou saillie dans l'ouverture d'insert optique cylindrique (61) qui comprend au moins une surface de positionnement qui s'étend dans une direction parallèle à l'axe de l'ouverture d'insert optique (61) ;
une butée (104) sur l'insert optique cylindrique (64), associée à l'au moins une surface de positionnement, qui vient en butée contre l'au moins une surface de positionnement pour l'orientation de rotation de l'insert optique (64) dans l'ouverture d'insert optique cylindrique (61), la butée (104) sur l'insert optique cylindrique (64) étant une surface de butée ou une broche de butée (104) qui est incluse dans un évidement de broche (106) dans l'insert optique cylindrique (64) ;
le procédé comprenant:
la fabrication de la surface précisément définie par voie optique (66) de l'insert optique (64) sur un tour (200) avec une commande CNC, le tour (200) étant prévu avec une tête de serrage (202) pouvant tourner autour d'un axe principal (A), dont la position de rotation est contrôlable, le tour (200) étant prévu avec un outil (204) qui peut être déplacé de manière contrôlable, dans une direction (X) sensiblement perpendiculaire à l'axe principal (A) et dans une direction (Z) parallèle à l'axe principal (A), moyennant quoi la surface précisément définie par voie optique (66) est formée par la rotation contrôlée de la tête de serrage (202) et le déplacement contrôlé de l'outil (204), à partir d'une position serrée de l'insert optique (64) dans la tête de serrage (202) ;
la fabrication de la surface de butée ou l'évidement de broche (106) de l'insert optique (64) avec un dispositif de coupe ou un foret (206) alors que l'insert optique (64) est dans ladite position serrée dans la tête de serrage (202), la commande CNC définissant la position de la surface de butée ou de l'évidement de broche (106) par rapport à la surface précisément définie par voie optique (66) par le biais du contrôle de rotation précis de la tête de serrage (202) pour positionner l'insert optique (64) par rapport au dispositif de coupe ou au foret (206).

2. Procédé selon la revendication 1, dans lequel le contrôle CNC du tour (200) contrôle la position de rotation de la tête de serrage (202) par incréments, la précision du contrôle CNC exprimé dans le nombre d'incréments par révolution étant d'au moins 3 000 incréments par 360° et de préférence étant d'environ 4 000 incréments par 360°.

3. Procédé selon la revendication 1 ou 2, dans lequel le contrôle CNC du tour (200) contrôle la position de l'outil dans la direction (Z) de l'axe principal (A) avec une résolution qui est inférieure à 1 micron, et de préférence avec une résolution qui est inférieure à 0,1 micron.

4. Procédé selon l'une quelconque des revendications 1 à 3, dans lequel le contrôle CNC du tour (200) contrôle la position de l'outil dans la direction (X) perpendiculaire à l'axe principal avec une résolution qui est inférieure à 1 micron, et de préférence avec une résolution qui est inférieure à 0,1 micron.

5. Procédé pour fabriquer un moule d'injection (50) pour fabriquer un dispositif ophtalmique, telle qu'une ébauche de lentille (260), une lentille de contact (250), une lentille intraoculaire ou un demi-moule de coulée (12 ; 20) pour fabriquer une ébauche de lentille (260), une lentille de contact (250) ou une lentille intraoculaire, le dispositif ophtalmique (12, 20 ; 250 ; 260) étant au moins prévu avec :
une surface précisément définie par voie optique (14 ; 24 ; 252 ; 262) qui n'est pas circulairement symétrique autour d'un axe central (L), mais par exemple torique, asphérique ou bifocale ou leur combinaison ; et
au moins une surface de référence (16-18 ; 26 ; 254 ; 256 ; 264 ; 266) par rapport à laquelle la surface précisément définie par voie optique (14 ; 24 ; 252 ; 262) doit être précisément positionnée à la fois dans les directions latérales et dans la direction de rotation ;
le procédé comprenant la provision d'un moule d'injection (50) en :
prévoyant un premier demi-moule d'injection (52) ayant au moins une ouverture d'insert optique cylindrique (61) ;
fabriquant au moins un insert optique cylindrique (64) ayant une surface d'insert optique précisément définie par voie optique (66) ;
recevant de manière détachable, l'insert optique (64) dans l'ouverture d'insert optique cylindrique (61) ;
prévoyant un second demi-moule d'injection (54) qui conjointement avec le premier demi-moule d'injection (52) ayant l'insert optique (64) inclus à l'intérieur de ce dernier détermine dans une position fermée une cavité de moule d'injection (56) dans laquelle le dispositif ophtalmique (12, 20 ; 250 ; 260) avec la au moins une surface de référence (16-18 ; 26 ; 254 ; 256 ; 264 ; 266) est moulé par injection et moyennant quoi la surface d'insert optique précisément définie par voie optique (66) définit la surface précisément définie par voie optique (14 ;24 ; 252 ; 262) à former du dispositif ophtalmique (12, 20),
prévoyant un évidement ou une saillie (102) dans l'ouverture d'insert optique cylindrique (61) qui comprend au moins une surface de positionnement qui s'étend dans une direction parallèle à l'axe de l'ouverture d'insert optique (61) ;
dans lequel la fabrication du au moins un insert optique cylindrique (64) est réalisée avec le procédé selon l'une quelconque des revendications 1 à 4 pour fournir la butée (104) sur l'insert optique cylindrique (64) qui est associée avec la au moins une surface de positionnement et qui vient en butée contre la au moins une surface de positionnement (102) pour l'orientation de rotation de l'insert optique (64) dans l'ouverture d'insert optique cylindrique (61), la butée sur l'insert optique cylindrique (64) étant la surface de butée ou une broche de butée (104) qui est incluse dans l'évidement de broche (106) dans l'insert optique cylindrique (64), dans lequel la surface de butée ou l'évidement de broche (106) de l'insert optique (64) est positionné(e) ainsi par rapport à la surface d'insert optique (66) dans un sens de rotation de sorte que la déviation de la position de rotation par rapport à la position de rotation souhaitée est inférieure à 0,12°, plus particulièrement inférieure à 0,09°.

6. Procédé selon la revendication 5, dans lequel le dispositif ophtalmique est un demi-moule de coulée (12 ; 20) pour fabriquer une ébauche de lentille (260), une lentille de contact (250) ou une lentille intraoculaire, la cavité de moule d'injection (58) étant configurée pour former un demi-moule de coulée (12 ; 20) qui est prévu avec
des premiers moyens de positionnement (16-18 ; 26) qui sont configurés pour la mise en prise des seconds moyens de positionnement (26 ; 16-18) d'un second demi-moule de coulée (20) pour l'orientation de rotation et latérale du demi-moule de coulée (12 ; 20) par rapport au second demi-moule de coulée (20 ; 12), alors que l'au moins une surface de référence (16-18 ; 26) par rapport à laquelle la surface précisément définie par voie optique (14 ; 24) doit être précisément positionnée, fait partie des premiers moyens de positionnement (16-18 ; 26), de sorte que suite à la mise en place du second demi-moule de coulée (20) sur le premier demi-moule de coulée (12), on obtient un positionnement de rotation et latéral précis du second demi-moule de coulée (20) par rapport au premier demi-moule de coulée (12).

7. Procédé selon la revendication 5, dans lequel le dispositif ophtalmique est une ébauche de lentille (260), une lentille de contact (250) ou une lentille intraoculaire qui, en plus de la surface précisément définie par voie optique (252 ; 262), est prévu avec une seconde surface précisément définie par voie optique (254 ; 264) qui est positionnée à l'opposé de la première surface précisément définie par voie optique (252 ; 262), dans lequel le procédé pour fabriquer le moule d'injection (50) comprend en outre :
la provision d'au moins une seconde ouverture d'insert optique cylindrique (61') qui est incluse dans le second demi-moule d'injection (54) ;
la fabrication d'au moins un second insert optique cylindrique (64') ayant une surface d'insert optique précisément définie par voie optique (66') ;
la réception de manière détachable le second insert optique (64') dans la seconde ouverture d'insert optique (61'), la surface d'insert optique précisément définie par voie optique (66') du second insert optique (64') définissant la seconde surface précisément définie par voie optique à former (254 ; 264) du dispositif ophtalmique (250 ; 260),
la provision un évidement ou une saillie (102') dans la seconde ouverture d'insert optique (61') qui comprend au moins une seconde surface de positionnement qui s'étend dans une direction parallèle à l'axe de la seconde ouverture d'insert optique (61') ;
dans lequel la fabrication du au moins un second insert optique cylindrique (64') est réalisée avec le procédé selon l'une quelconque des revendications 1 à 4 pour fournir une seconde butée (104') sur le second insert optique (64') qui est associé à la au moins une seconde surface de positionnement et qui vient en butée contre la au moins une seconde surface de positionnement pour l'orientation de rotation du second insert optique (64') dans la seconde ouverture d'insert optique (61'), la seconde butée sur le second insert optique étant la surface de butée ou une broche de butée (104') qui est incluse dans l'évidement de broche (106') dans le second insert optique (64'), dans lequel la surface de butée ou l'évidement de broche (106') du second insert optique (64') est positionné(e) ainsi par rapport à la surface d'insert optique (66') du second insert optique (64') dans le sens de rotation de sorte que la déviation de la position de rotation par rapport à la position de rotation souhaitée est inférieure à 0,12°, plus particulièrement inférieure à 0,09°.

8. Procédé selon la revendication 7, dans lequel l'au moins une surface de référence par rapport à laquelle la surface précisément définie par voie optique (66) doit être précisément positionnée, est la seconde surface précisément définie par voie optique (66'), de sorte que les deux surfaces précisément définies par voie optique (66, 66') sur les côtés opposés de la lentille de contact (250) ou de la lentille intraoculaire (260) sont précisément positionnées l'une par rapport à l'autre dans la direction de rotation et latérale.

9. Procédé selon la revendication 5, dans lequel la au moins une surface de référence par rapport à laquelle la surface précisément définie par voie optique est précisément positionnée, est un bord circonférentiel (256 ; 266) du dispositif ophtalmique (12 ; 20 ; 250 ; 260), de sorte que la surface précisément définie par voie optique (66) est précisément positionnée dans une direction de rotation et latérale par rapport au bord circonférentiel (256 ; 266) du dispositif ophtalmique (12 ; 20 ; 250 ; 260).

10. Procédé pour fabriquer un dispositif ophtalmique comprenant:
La provision d'un moule d'injection (50) avec le procédé selon l'une quelconque des revendications 5 à 9 ;
L'injection du plastique dans la cavité de moule d'injection (58) ;
le durcissement du plastique dans la cavité de moule d'injection (58) ; et
le retrait du dispositif ophtalmique (12 ; 20 ; 250 ; 260) de la cavité de moule d'injection.

11. Procédé pour fabriquer un moule de coulée (10) afin de fabriquer une lentille de contact (250), une ébauche de lentille (260) ou une lentille intraoculaire, le moule de coulée (10) étant prévu avec :
un premier demi-moule de coulée (12) avec des premiers moyens de positionnement (16-18) ; et
un second demi-moule de coulée (20) avec des seconds moyens de positionnement (26) qui sont configurés pour coopérer avec les premiers moyens de positionnement (16-18) pour le positionnement de rotation et latéral du premier demi-moule de coulée (12) par rapport au second demi-moule de coulée (20) ;
le procédé comprenant:
l'utilisation du procédé selon la revendication 10 pour fabriquer un premier demi-moule de coulée (12) ; et
l'utilisation du procédé selon la revendication 10 pour fabriquer un second demi-moule de coulée (20).

12. Procédé pour fabriquer une lentille de contact ou une lentille intraoculaire comprenant :
L'utilisation du procédé selon la revendication 11 pour fournir un premier et un second demi-moule de coulée (12, 20) ;
Le remplissage du premier demi-moule de coulée (12) avec un plastique ;
le placement du second demi-moule de coulée (20) sur le premier demi-moule de coulée (12) de sorte que les seconds moyens de positionnement (26) mettent en prise les premiers moyens de positionnement (16-18), les premiers et seconds moyens de positionnement étant configurés pour serrer le second demi-moule de coulée (20) sur le premier demi-moule de coulée (12) sous une sollicitation ;
le durcissement du plastique dans le moule de coulée (10) pour former la lentille (250) ou l'ébauche de lentille (260) ;
le retrait du second demi-moule de coulée (20) ; et
le scellement du premier demi-moule de coulée (12) dans lequel la lentille (250) ou l'ébauche de lentille (260) est située, avec un joint d'étanchéité (36) pour former un conditionnement par rapport au premier demi-moule de coulée (12) et au joint d'étanchéité (36), dans lequel conditionnement, est incluse la lentille (250) ou l'ébauche de lentille (260).

13. Procédé selon la revendication 12, dans lequel avant d'appliquer le joint d'étanchéité (36), un liquide est introduit dans le premier demi-moule de coulée (12).
